(19) Europäisches Patentamt
European Patent Office
Office européen des brevets

(11) **EP 4 559 603 A1**

(12) **EUROPEAN PATENT APPLICATION**
published in accordance with Art. 153(4) EPC

(43) Date of publication:
**28.05.2025 Bulletin 2025/22**

(21) Application number: **23845285.8**

(22) Date of filing: **06.07.2023**

(51) International Patent Classification (IPC):
**B23C 1/06** (2006.01)   **B23C 9/00** (2006.01)
**B23Q 17/24** (2006.01)

(52) Cooperative Patent Classification (CPC):
**B23P 25/006; B23K 26/0093; B23K 26/0608;
B23K 26/0613**; B23C 9/00; B23K 2101/20

(86) International application number:
**PCT/CN2023/105991**

(87) International publication number:
**WO 2024/022072 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.07.2022 CN 202210871267**

(71) Applicant: **Kede Numerical Control Co., Ltd.
Dalian, Liaoning 116000 (CN)**

(72) Inventors:
• **YU, Benhong**
  **Dalian, Liaoning 116000 (CN)**

• **REN, Zhihui**
  **Dalian, Liaoning 116000 (CN)**
• **JING, Chuansi**
  **Dalian, Liaoning 116000 (CN)**
• **ZHANG, Jingming**
  **Dalian, Liaoning 116000 (CN)**
• **JIANG, Qiuyu**
  **Dalian, Liaoning 116000 (CN)**
• **LIU, Jingwen**
  **Dalian, Liaoning 116000 (CN)**

(74) Representative: **JD&P Patent Attorneys
Joanna Dargiewicz & Partners
ul. Mysliborska 93A/50
03-185 Warszawa (PL)**

(54) **DUAL-PATH LASER ASSISTED MACHINING SYSTEM**

(57) The present invention provides a dual-path laser-assisted machining system including: a tool; a first laser emitting device; and a second laser emitting device, wherein the first laser emitting device can emit laser to a machining surface of a workpiece and form a first irradiation area, the second laser emitting device can emit laser to the machining surface of the workpiece and form a second irradiation area, the first irradiation area and the second irradiation area have an overlapping area, a machining point of the tool on the machining surface falls within the overlapping area, and an angle between a projection of a line connecting the first laser emitting device and the tool on the machining surface and a projection of a line connecting the second laser emitting device and the tool on the machining surface is not 0°. The present invention discloses a dual-path laser-assisted machining system, which, by setting two laser generating devices, makes two laser irradiation areas overlap and complement each other, greatly reduces a blind area, realizes softening of an area to be machined, and completes high-precision machining of hard and brittle materials.

EP 4 559 603 A1

Fig. 3

MACHINING DIRECTION

**Description**

**Technical Field**

The present invention relates to a field of machining technology, and particularly, to a dual-path laser-assisted machining system.

**Background Art**

Hard and brittle materials such as cemented carbide have extremely broad application prospects in fields such as aerospace, space technology, medicine, and precision manufacturing due to their excellent properties such as low density, high strength, high temperature resistance, and wear resistance. Key components made of these materials have a long service life and application characteristics compared with traditional materials due to their excellent mechanical properties.

Hard and brittle materials must undergo precision machining to achieve higher dimensional and shape accuracy requirements. Due to their characteristics of high hardness, brittleness and low fracture toughness, they are very difficult to machine during precision machining. Laser-assisted cutting uses high-energy laser beam heating to generate local high temperature to cause thermal softening of a workpiece material in an area to be machined, reduce the hardness of the material, and improve the plasticity of the material, thereby improving the cutting performance of the material.

However, auxiliary laser is blocked by the tool, and a blind area that cannot be irradiated is formed on one side of the tool away from the laser source. The portion in the blind area cannot be heated and softened by the laser. In the process of high-precision complex machining, the tool has flexible movement directions and a variable movement trajectory. Thus, the blind area that cannot be irradiated by the laser will affect the machining of the workpiece by the tool.

**Summary of Invention**

The present invention provides a dual-path laser-assisted machining system to solve the above problem.

The dual-path laser-assisted machining system includes: a tool; a first laser emitting device; and a second laser emitting device, wherein the first laser emitting device can emit laser to a machining surface of a workpiece and form a first irradiation area, the second laser emitting device can emit laser to the machining surface of the workpiece and form a second irradiation area, the first irradiation area and the second irradiation area have an overlapping area, a machining point of the tool on the machining surface falls within the overlapping area, and an angle between a projection of a line connecting the first laser emitting device and the tool on the machining surface and a projection of a line connecting the second laser emitting device and the tool on the machining surface is not 0°.

Further, the first laser emitting device and the second laser emitting device are respectively arranged on both sides of the tool, and axes of the first laser emitting device, the second laser emitting device and the tool are coplanar.

Further, the first laser emitting device and the second laser emitting device are installed at different heights, and assuming that a position of the first laser emitting device is point p1, a position of the second laser emitting device is point p2, a tool circle center is point o, a tool radius is r, a distance between the first laser emitting device and the second laser emitting device is l, l1 is a distance between point p1 and point o, l2 is a distance between point p2 and point o, angle c is an angle of p1op2, h1 is a distance from p1 to the machining surface, h2 is a distance from p2 to the machining surface, following formulas are satisfied:

$$c1 = \arcsin\left(\frac{r}{l1}\right)$$

$$c2 = \arcsin\left(\frac{r}{l2}\right)$$

$$l1 = \sqrt{h1^2 + q1^2}$$

$$l2 = \sqrt{h2^2 + q2^2}$$

when c ≤ (pi-(c1+c2)) is satisfied,

$$r * (pi - c + \arcsin(\frac{r}{l1}) + \arcsin(\frac{r}{l2})) + l1 * \sqrt{1 - \frac{r^2}{l1^2}} + l2 * \sqrt{\left(1 - \frac{r^2}{l2^2}\right)}$$

$$- \frac{l * \left( \sin\left(c + \arcsin\left(\frac{r}{l1}\right)\right) \right)}{\sin\left(c - \arcsin\left(\frac{r}{l1}\right) - \arcsin\left(\frac{r}{l2}\right)\right)}$$

$$+ \frac{l * \sin\left(\frac{r}{l2}\right) - 2 * c}{\sin\left(c - \arcsin\left(\frac{r}{l1}\right) - \arcsin\left(\frac{r}{l2}\right)\right)}) < a$$

wherein pi is $\pi$, and a is a maximum blind area.

Further, the first laser emitting device and the second laser emitting device are installed at different heights, and assuming that a position of the first laser emitting device is point p1, a position of the second laser emitting device is point p2, a tool circle center is point o, a tool radius is r, a distance between the first laser emitting device and the second laser emitting device is l, l1 is a distance between point p1 and point o, l2 is a distance between point p2 and point o, angle c is an angle of p1op2, h1 is a distance from p1 to the machining surface, h2 is a distance from p2 to the machining surface, following formulas are satisfied:

$$c1 = \arcsin(\frac{r}{l1})$$

$$c2 = \arcsin(\frac{r}{l2})$$

$$l1 = \sqrt{h1^2 + q1^2}$$

$$l2 = \sqrt{h2^2 + q2^2}$$

when c>(pi-(c1+c2)) is satisfied,

$$r * (pi - c + \arcsin(\frac{r}{l1}) + \arcsin(\frac{r}{l2})) + l1 * \sqrt{1 - \frac{r^2}{l1^2}} + l2 * \sqrt{\left(1 - \frac{r^2}{l2^2}\right)}$$

$$- \frac{l * \left( \sin\left(c + \arcsin\left(\frac{r}{l1}\right)\right) \right)}{\sin\left(c - \arcsin\left(\frac{r}{l1}\right) - \arcsin\left(\frac{r}{l2}\right)\right)}$$

$$+ \frac{l * \sin\left(\frac{r}{l2}\right) - 2 * c}{\sin\left(c - \arcsin\left(\frac{r}{l1}\right) - \arcsin\left(\frac{r}{l2}\right)\right)}) < a$$

and

$$r * (c - \text{pi} + \text{asin}(\frac{r}{l1}) + \text{asin}(\frac{r}{l2})) + l1 * \sqrt{1 - \frac{r^2}{l1^2}} + l2 * \sqrt{1 - \frac{r^2}{l2^2}}$$

$$- \frac{r * \sin(\text{asin}(\frac{r}{l1}) - \frac{\text{asin}(l1 * \sin(c) * \sqrt{1 - \frac{r^2}{l1^2}})}{l})}{\sin(-c - \text{asin}(\frac{r}{l1}) - \text{asin}(\frac{r}{l2}))}$$

$$+ \frac{(r * \sin(c + \text{asin}(\frac{l1 * \sin(c) * \sqrt{1 - \frac{r^2}{l1^2}}}{l})) + \text{asin}(\frac{r}{l2}))}{\sin(-c - \text{asin}(\frac{r}{l1}) - \text{asin}(\frac{r}{l2}))} < a$$

wherein pi is $\pi$, and a is a maximum blind area.

Further, laser emitted by the first laser emitting device is used to heat a workpiece, and laser emitted by the second laser emitting device is used to heat a surface of the workpiece.

Further, the first laser emitting device is used to detect a wear amount of the tool.

Further, the first laser emitting device is used to trim the tool.

The present invention discloses a dual-path laser-assisted machining system, which, by setting two laser generating devices, makes two laser irradiation areas overlap and complement each other, greatly reduces a blind area, realizes softening of an area to be machined, and completes high-precision machining of hard and brittle materials.

**Brief Description of Drawings**

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.

Fig. 1 is a schematic diagram of a structure of a dual-path laser-assisted machining system according to Example 1 of the present invention.

Fig. 2 is a schematic diagram of a laser irradiation range of the dual-path laser-assisted machining system according to Example 1 of the present invention.

Fig. 3 is a schematic diagram of a machining state of the dual-path laser-assisted machining system according to Example 1 of the present invention.

Fig. 4 is a schematic diagram of a machining state of a dual-path laser-assisted machining system according to Example 2 of the present invention.

In the drawings: 1. Tool; 2. First laser emitting device; 3. Second laser emitting device; 4. First irradiation area; 5. Second irradiation area; 6. Ram; 7. First optical path; 8. Second optical path; 9. Detection optical path.

**Description of Embodiments**

In order to make the purposes, technical solutions and advantages of the embodiments of the present invention clearer, the technical solutions in the embodiments of the present invention will be clearly and completely described below with reference to the accompanying drawings in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

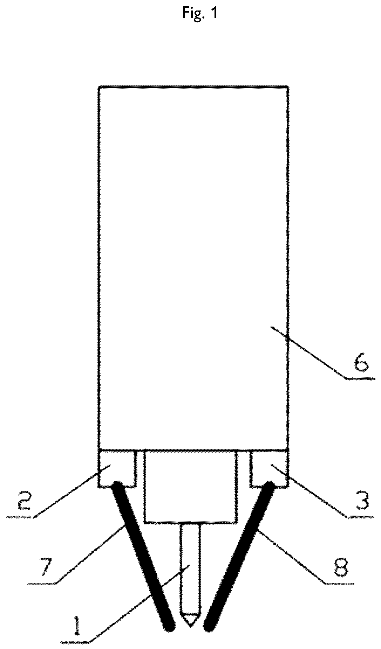

As shown in Figs. 1 to 3, a dual-path laser-assisted machining system includes: a tool 1; a first laser emitting device 2; and a second laser emitting device 3, wherein the first laser emitting device 2 can emit laser to a machining surface of a workpiece and form a first irradiation area 4, the second laser emitting device 3 can emit laser to the machining surface of the workpiece and form a second irradiation area 5, the first irradiation area 4 and the second irradiation area 5 have an overlapping area, a machining point of the tool 1 on the workpiece falls within the overlapping area, and an angle between a projection of a line connecting the first laser emitting device 2 and the tool 1 on the machining surface and a projection of a line connecting the second laser emitting device 3 and the tool 1 on the machining surface is not 0°.

A laser irradiation position is controlled through a machine tool control system so that laser irradiates an area to be machined of the workpiece, and before machining of the tool, the temperature of the area to be machined of the workpiece is increased and the area to be machined of the workpiece is softened by laser irradiation. In the present embodiment, two laser emitting devices are provided, i.e., the first laser emitting device 2 and the second laser emitting device 3. The line connecting the first laser emitting device 2 and the tool 1 is the line connecting the laser emitting point of the first laser emitting device 2 and the tool tip of the tool 1. The line connecting the second laser emitting device 3 and the tool 1 is the line connecting the laser emitting point of the second laser emitting device 2 and the tool tip of the tool 1. The machining surface is the surface to be machined of the workpiece. The projections of the two connecting lines on the machining surface are still two straight lines. The angle between the two straight lines is not 0°. The laser emitting devices have blind areas that cannot be irradiated on one side of the tool away from the laser emitting devices. The angle between the projections of the two connecting lines is not 0°. Thus, the blind areas that cannot be irradiated by the two laser emitting devices are different. When the tool is machining the workpiece, if a next machining point is located in a blind area of one laser emitting device, the next machining point can be heated by the other laser emitting device to increase the temperature of an area to be machined where the next machining point is located and soften the area to be machined where the next machining point is located, and the machining continues.

In the present embodiment, the first laser emitting device 2 and the second laser emitting device 3 are both installed on a ram 6, move using a machine tool coordinate system and are under the control of a machine tool numerical control system, and thus, a laser emitting angle can be changed.

Further, the first laser emitting device 2 and the second laser emitting device 3 are respectively arranged on both sides of the tool 1, and axes of the first laser emitting device 2, the second laser emitting device 3 and the tool 1 are coplanar.

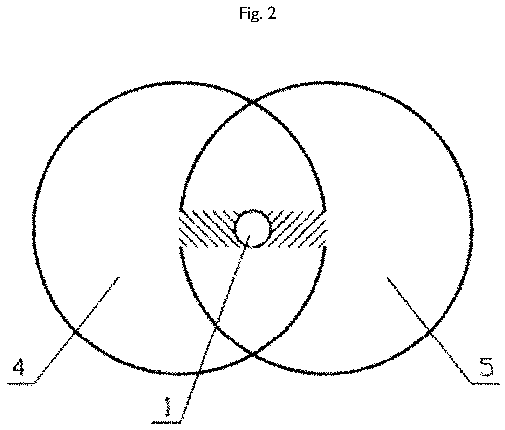

The laser emitting device moves using the machine tool coordinate system, and its position relative to the tool is fixed. When axes of the first laser emitting device 2, the second laser emitting device 3 and the tool 1 are coplanar, the projection of the first laser emitting device 2 on the machining surface, the projection of the second laser emitting device 3 on the machining surface and the projection of the tool 1 on the machining surface are colinear. When the heights of the first laser emitting device and the second laser emitting device from the machining surface are equal, the blind area of the first laser emitting device 2 can be compensated by the second laser emitting device 3 to the greatest extent. As shown in Fig. 2, the first irradiation area 4 and the second irradiation area 5 each form a blind area represented by the shadow in the drawing on the side of the tool 1 away from the laser emitting device, and the blind area generated by each of the two laser emitting devices can be covered by the other laser emitting device.

Furthermore, in order to adapt to different structures of different machine tools, the first laser emitting device 2 and the second laser emitting device 3 are installed at different heights.

Assuming that a position of the first laser emitting device 2 is point p1, a position of the second laser emitting device 3 is point p2, a tool circle center is point o, a tool radius is r, a distance between the first laser emitting device 2 and the second laser emitting device 3 is l, l1 is a distance between point p1 and point o, l2 is a distance between point p2 and point o, angle c is an angle of p1op2, h1 is a distance from p1 to the machining surface, h2 is a distance from p2 to the machining surface, following formulas are satisfied:

$$c1 = \arcsin(\frac{r}{l1})$$

$$c2 = \arcsin(\frac{r}{l2})$$

$$l1 = \sqrt{h1^2 + q1^2}$$

$$l2 = \sqrt{h2^2 + q2^2}$$

when $c \leq (pi-(c1+c2))$, the blind area exists only on one side of the tool, and the conditions that need to be satisfied at this time are:

$$r * (pi - c + \arcsin(\frac{r}{l1}) + \arcsin(\frac{r}{l2})) + l1 * \sqrt{1 - \frac{r^2}{l1^2}} + l2 * \sqrt{\left(1 - \frac{r^2}{l2^2}\right)}$$

$$- \frac{l * (\sin(c + \arcsin(\frac{r}{l1})))}{\sin(c - \arcsin(\frac{r}{l1}) - \arcsin(\frac{r}{l2}))}$$

$$+ \frac{l * \sin(\frac{r}{l2}) - 2 * c}{\sin(c - \arcsin(\frac{r}{l1}) - \arcsin(\frac{r}{l2}))}) < a$$

wherein pi is $\pi$, a is a maximum blind area, and h1 and h2 are both greater than 0.

The maximum blind area is the maximum area not irradiated by the laser when the tool can work normally during the machining process of the machine tool. When the blind area is smaller than the maximum blind area, the machine tool can work normally.

When $c > (pi-(c1+c2))$, the blind area exists on both sides of the tool, and the conditions that need to be satisfied at this time are:

$$r * (pi - c + \arcsin(\frac{r}{l1}) + \arcsin(\frac{r}{l2})) + l1 * \sqrt{1 - \frac{r^2}{l1^2}} + l2 * \sqrt{\left(1 - \frac{r^2}{l2^2}\right)}$$

$$- \frac{l * (\sin(c + \arcsin(\frac{r}{l1})))}{\sin(c - \arcsin(\frac{r}{l1}) - \arcsin(\frac{r}{l2}))}$$

$$+ \frac{l * \sin(\frac{r}{l2}) - 2 * c}{\sin(c - \arcsin(\frac{r}{l1}) - \arcsin(\frac{r}{l2}))}) < a$$

and

$$r * (c - pi + asin(\frac{r}{l1}) + asin(\frac{r}{l2})) + l1 * \sqrt{1 - \frac{r^2}{l1^2}} + l2 * \sqrt{1 - \frac{r^2}{l2^2}}$$

$$- \frac{r * sin(asin(\frac{r}{l1}) - \frac{asin(l1 * sin(c) * \sqrt{1 - \frac{r^2}{l1^2}})}{l})}{sin(-c - asin(\frac{r}{l1}) - asin(\frac{r}{l2}))}$$

$$+ \frac{(r * sin(c + asin(\frac{l1 * sin(c) * \sqrt{1 - \frac{r^2}{l1^2}}}{l})) + asin(\frac{r}{l2}))}{sin(-c - asin(\frac{r}{l1}) - asin(\frac{r}{l2}))} < a$$

wherein pi is $\pi$, a is a maximum blind area, and h1 and h2 are both greater than 0.

The maximum blind area is the maximum area not irradiated by the laser when the tool can work normally during the machining process of the machine tool. When the blind area is smaller than the maximum blind area, the machine tool can work normally.

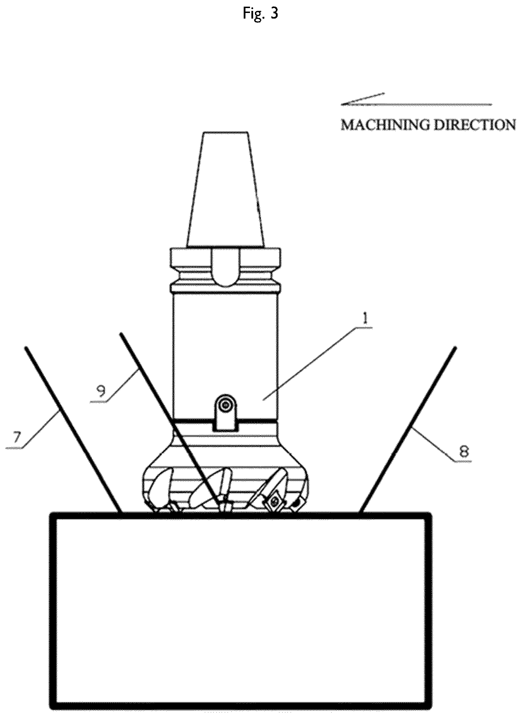

As shown in Fig. 3, the present embodiment also discloses a dual-path laser-assisted milling machine, wherein the tool 1 is a milling tool, laser emitted by the first laser emitting device 2 irradiates an area to be machined of the workpiece along a first optical path 7 to heat the workpiece, and laser emitted by the second laser emitting device 3 irradiates a machined area along a second optical path 8 to heat the surface of the workpiece. When the tool moves to the blind area of the first laser emitting device 2, the second laser emitting device 3 irradiates the area to be machined to heat the area to be machined.

The first laser emitting device 2 can also be a laser measuring device or a laser trimming device. When the first laser emitting device 2 is a laser measuring device, it can be used to detect the wear amount of the tool 1. When the first laser emitting device 2 is a laser trimming device, it can be used to trim the tool 1. A third laser emitting device may also be additionally provided to detect the wear amount of the tool 1 or trim the tool 1.

Example 2

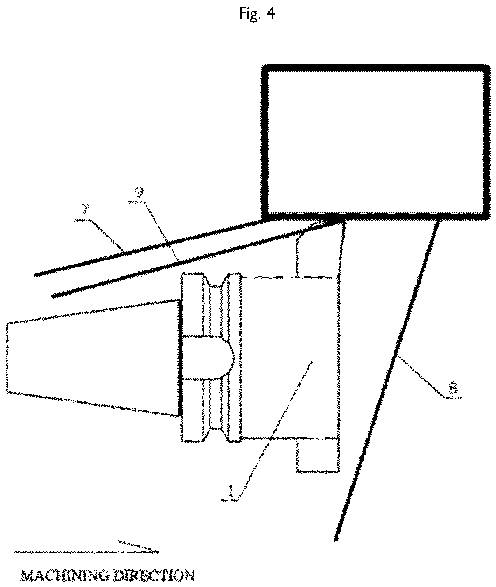

As shown in Fig. 4, the present embodiment is different from Example 1 in that the present embodiment discloses a dual-path laser-assisted turning machine, wherein laser emitted by the first laser emitting device irradiates an area to be machined of the workpiece along the first optical path 7 to heat the workpiece, and laser emitted by the second laser emitting device 3 irradiates a machined area along the second optical path 8 to heat the surface of the workpiece. The first laser emitting device may also be a laser measuring device to detect the wear amount of the tool 1.

Finally, it should be noted that: the above embodiments are only used to illustrate the technical solutions of the present invention, but not to limit them; although the present invention has been described in detail with reference to the foregoing embodiments, a person skilled in the art should understand that: the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

**Claims**

1. A dual-path laser-assisted machining system comprising:

    a tool (1);
    a first laser emitting device (2); and
    a second laser emitting device (3), wherein
    the first laser emitting device (2) can emit laser to a machining surface of a workpiece and form a first irradiation area (4), the second laser emitting device (3) can emit laser to the machining surface of the workpiece and form a second irradiation area (5), the first irradiation area (4) and the second irradiation area (5) have an overlapping area, a machining point of the tool (1) on the machining surface falls within the overlapping area, and an angle between a projection of a line connecting the first laser emitting device (2) and the tool (1) on the machining surface and a projection of a line connecting the second laser emitting device (3) and the tool (1) on the machining surface is not 0°.

2. The dual-path laser-assisted machining system according to claim 1, wherein
the first laser emitting device (2) and the second laser emitting device (3) are respectively arranged on both sides of the tool (1), and axes of the first laser emitting device (2), the second laser emitting device (3) and the tool (1) are coplanar.

3. The dual-path laser-assisted machining system according to claim 1, wherein

the first laser emitting device (2) and the second laser emitting device (3) are installed at different heights, and assuming that a position of the first laser emitting device (2) is point p1, a position of the second laser emitting device (3) is point p2, a tool circle center is point o, a tool radius is r, a distance between the first laser emitting device (2) and the second laser emitting device (3) is l, l1 is a distance between point p1 and point o, l2 is a distance between point p2 and point o, angle c is an angle of p1op2, h1 is a distance from p1 to the machining surface, h2 is a distance from p2 to the machining surface, following formulas are satisfied:

$$c1 = \arcsin(\frac{r}{l1})$$

$$c2 = \arcsin(\frac{r}{l2})$$

$$l1 = \sqrt{h1^2 + q1^2}$$

$$l2 = \sqrt{h2^2 + q2^2}$$

when $c \leq (pi-(c1+c2))$ is satisfied,

$$r * (pi - c + \arcsin(\frac{r}{l1}) + \arcsin(\frac{r}{l2})) + l1 * \sqrt{1 - \frac{r^2}{l1^2}} + l2 * \sqrt{\left(1 - \frac{r^2}{l2^2}\right)}$$

$$- \frac{l * (\sin\left(c + \arcsin\left(\frac{r}{l1}\right)\right))}{\sin\left(c - \arcsin\left(\frac{r}{l1}\right) - \arcsin\left(\frac{r}{l2}\right)\right)}$$

$$+ \frac{l * \sin\left(\frac{r}{l2}\right) - 2 * c}{\sin\left(c - \arcsin\left(\frac{r}{l1}\right) - \arcsin\left(\frac{r}{l2}\right)\right)}) < a$$

wherein pi is $\pi$, and a is a maximum blind area.

4. The dual-path laser-assisted machining system according to claim 1, wherein

the first laser emitting device (2) and the second laser emitting device (3) are installed at different heights, and assuming that a position of the first laser emitting device (2) is point p1, a position of the second laser emitting device (3) is point p2, a tool circle center is point o, a tool radius is r, a distance between the first laser emitting device (2) and the second laser emitting device (3) is l, l1 is a distance between point p1 and point o, l2 is a distance between point p2 and point o, angle c is an angle of p1op2, h1 is a distance from p1 to the machining surface, h2 is a distance from p2 to the machining surface, following formulas are satisfied:

$$c1 = \arcsin\left(\frac{r}{l1}\right)$$

$$c2 = \arcsin\left(\frac{r}{l2}\right)$$

$$l1 = \sqrt{h1^2 + q1^2}$$

$$l2 = \sqrt{h2^2 + q2^2}$$

when c>(pi-(c1+c2)) is satisfied,

$$r * \left(pi - c + \arcsin\left(\frac{r}{l1}\right) + \arcsin\left(\frac{r}{l2}\right)\right) + l1 * \sqrt{1 - \frac{r^2}{l1^2}} + l2 * \sqrt{\left(1 - \frac{r^2}{l2^2}\right)}$$

$$- \frac{l * \left(\sin\left(c + \arcsin\left(\frac{r}{l1}\right)\right)\right)}{\sin\left(c - \arcsin\left(\frac{r}{l1}\right) - \arcsin\left(\frac{r}{l2}\right)\right)}$$

$$+ \frac{l * \sin\left(\frac{r}{l2}\right) - 2 * c}{\sin\left(c - \arcsin\left(\frac{r}{l1}\right) - \arcsin\left(\frac{r}{l2}\right)\right)}) < a$$

and

$$r * \left(c - pi + \mathrm{asin}\left(\frac{r}{l1}\right) + \mathrm{asin}\left(\frac{r}{l2}\right)\right) + l1 * \sqrt{1 - \frac{r}{l1^2}^2} + l2 * \sqrt{1 - \frac{r}{l2^2}^2}$$

$$- \frac{r * \sin\left(\mathrm{asin}\left(\frac{r}{l1}\right) - \frac{\mathrm{asin}(l1 * \sin(c) * \sqrt{1 - \frac{r^2}{l1^2}})}{l}\right)}{\sin\left(- c - \mathrm{asin}\left(\frac{r}{l1}\right) - \mathrm{asin}\left(\frac{r}{l2}\right)\right)}$$

$$+ \frac{(r * \sin\left(c + \mathrm{asin}\left(\frac{l1 * \sin(c) * \sqrt{1 - \frac{r^2}{l1^2}}}{l}\right)\right)) + \mathrm{asin}\left(\frac{r}{l2}\right)}{\sin\left(- c - \mathrm{asin}\left(\frac{r}{l1}\right) - \mathrm{asin}\left(\frac{r}{l2}\right)\right)} < a$$

wherein pi is $\pi$, and a is a maximum blind area.

5. The dual-path laser-assisted machining system according to claim 1, wherein

laser emitted by the first laser emitting device (2) is used to heat a workpiece, and laser emitted by the second laser emitting device (3) is used to heat a surface of the workpiece.

6. The dual-path laser-assisted machining system according to claim 1, wherein the first laser emitting device (2) is used to detect a wear amount of the tool (1).

7. The dual-path laser-assisted machining system according to claim 1, wherein the first laser emitting device (2) is used to trim the tool (1).

Fig. 1

Fig. 2

Fig. 3

MACHINING DIRECTION

Fig. 4

MACHINING DIRECTION

## INTERNATIONAL SEARCH REPORT

International application No.

**PCT/CN2023/105991**

### A. CLASSIFICATION OF SUBJECT MATTER

B23C1/06(2006.01)i；ใ B23C9/00(2006.01)i；ใ B23Q17/24(2006.01)i

According to International Patent Classification (IPC) or to both national classification and IPC

### B. FIELDS SEARCHED

Minimum documentation searched (classification system followed by classification symbols)

IPC:B23C,B23Q

Documentation searched other than minimum documentation to the extent that such documents are included in the fields searched

Electronic data base consulted during the international search (name of data base and, where practicable, search terms used)

CNTXT, WPABSC, ENTXTC: 科德数控, 激光, 刀, 两路, 双路, 第一, 第二, 重叠, 重合, 加热, 盲区, laser, path, cutter, tool, double, overlap????, heat???, area, blind.

### C. DOCUMENTS CONSIDERED TO BE RELEVANT

| Category* | Citation of document, with indication, where appropriate, of the relevant passages | Relevant to claim No. |
|---|---|---|
| X | US 2016101492 A1 (METAL INDUSTRIES RESEARCH AND DEVELOPMENT CENTRE) 14 April 2016 (2016-04-14)<br>description, paragraphs 14-23, and figures 1-4 | 1, 2, 5-7 |
| PX | CN 115383189 A (KEDE NUMERICAL CONTROL CO., LTD.) 25 November 2022 (2022-11-25)<br>entire document | 1-7 |
| A | CN 107378235 A (CENTRAL SOUTH UNIVERSITY) 24 November 2017 (2017-11-24)<br>entire document | 1-7 |
| A | CN 114311343 A (YANCHENG TRINA SOLAR GUONENG SCIENCE & TECHNOLOGY CO., LTD.) 12 April 2022 (2022-04-12)<br>entire document | 1-7 |
| A | CN 114571064 A (NANJING UNIVERSITY OF AERONAUTICS AND ASTRONAUTICS) 03 June 2022 (2022-06-03)<br>entire document | 1-7 |
| A | CN 112743297 A (TIANJIN UNIVERSITY) 04 May 2021 (2021-05-04)<br>entire document | 1-7 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 October 2023** | **11 October 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/105991**

### C.    DOCUMENTS CONSIDERED TO BE RELEVANT

| Category* | Citation of document, with indication, where appropriate, of the relevant passages | Relevant to claim No. |
|---|---|---|
| A | CN 113369996 A (SHIGANG JINGCHENG EQUIPMENT DEVELOPMENT & MANUFACTURING CO., LTD.) 10 September 2021 (2021-09-10)<br>entire document | 1-7 |
| A | JP 2009226475 A (TOWA CORP. et al.) 08 October 2009 (2009-10-08)<br>entire document | 1-7 |

Form PCT/ISA/210 (second sheet) (July 2022)

**INTERNATIONAL SEARCH REPORT**
Information on patent family members

International application No.

**PCT/CN2023/105991**

| Patent document cited in search report | | | Publication date (day/month/year) | Patent family member(s) | Publication date (day/month/year) |
|---|---|---|---|---|---|
| US | 2016101492 | A1 | 14 April 2016 | None | |
| CN | 115383189 | A | 25 November 2022 | None | |
| CN | 107378235 | A | 24 November 2017 | None | |
| CN | 114311343 | A | 12 April 2022 | None | |
| CN | 114571064 | A | 03 June 2022 | None | |
| CN | 112743297 | A | 04 May 2021 | None | |
| CN | 113369996 | A | 10 September 2021 | None | |
| JP | 2009226475 | A | 08 October 2009 | None | |

Form PCT/ISA/210 (patent family annex) (July 2022)